# EUROPEAN PATENT SPECIFICATION

(11) **EP 2 639 246 B1**
(45) Date of publication and mention of the grant of the patent: **26.11.2014**
(21) Application number: 13158800.6
(22) Date of filing: 12.03.2013
(51) Int. Cl.: C08C 19/20, B60C 1/00, C08C 19/22, C08F 236/06, C08F 236/10, C08L 9/00, C08L 9/06

(54) **Functionalized elastomer and tire comprising such an elastomer**
Funktionalisiertes Elastomer und Reifen mit einem solchen Elastomer
Élastomère fonctionnalisé et pneu comprenant un tel élastomère

(30) Priority: 14.03.2012 US 201213419561
(43) Date of publication of application: 18.09.2013
(73) Proprietor: The Goodyear Tire & Rubber Company, Akron, Ohio 44316 (US)
(72) Inventor: Mruk, Ralf, L-9164 Lipperscheid (LU); Roskamp, Robert Fokko, D-54294 Trier (DE); Hermann, Alexandra, D-55116 Mainz (DE); Zentel, Rudolf Wilhelm, D-55283 Nierstein (DE)
(74) Representative: Kutsch, Bernd

(56) References cited:
- EP-A1- 2 119 730
- WO-A1-2010/000299
- WO-A2-2011/068846
- JP-A- S61 221 242
- JP-A- 2009 275 180
- KR-A- 20040 044 762
- US-A- 4 289 861
- US-A1- 2003 135 006

## Description

### Background

Supramolecular bonds between different polymer chains or polymer chains and filler particles can be formed by different non-covalent interactions. These include electrostatic interactions due to polymer bound ionic groups, dipole-dipole interactions such as hydrogen bonds due to polymer bound polar groups and coordinative interactions due to polymer bound ligands and dispersed metal ions. Supramolecular interactions represent a supplementary mechanism of polymer network formation in elastomers in addition to the classical covalent sulfur network. The formation of the additional network has the potential to enhance the mechanical compound properties and to improve the tear behavior in cured rubber compounds. Due to their high polarity, the introduced functional groups could also improve polymer-filler interactions and modify the surface polarity of tire tread compounds which might have a positive influence on wet tire performance.

EP-A- 2 119 730 describes a functionalized elastomer in accordance with the preamble of claim 1.

Further rubber compositions comprising functionalized elastomers are described in US-A- 2003/0135006, WO-A- 2010/000299, WO-A- 2011/068846, JP-A- 2009-275180, KR-A- 10-2004-0044762, JP-A- 61-221242 and US-A- 4,289,861.

### Summary

The present invention is directed to a functionalized elastomer in accordance with claim 1 and to a tire in accordance with claim 11.

Dependent claims refer to preferred embodiments of the invention.

### Brief Description of the Drawings

Figure 1 shows rheological properties as a function of temperature for a styrene-butadiene elastomer.
Figure 2 shows rheological properties as a function of temperature for a styrene-butadiene elastomer functionalized with glutathione according to the present invention.

### Detailed Description

There is disclosed a functionalized elastomer comprising: a polymeric backbone chain derived from a monomer comprising at least one conjugated diene monomer and optionally at least one vinyl aromatic monomer; and a functional group bonded to the backbone chain, the functional group comprising an oligopeptide or modified oligopeptide.

The functionalized elastomer has the structure I

x⁅s-z]ₙ (I)

where X is a polymer derived from a monomer comprising at least one conjugated diene monomer and optionally at least one vinyl aromatic monomer; S is sulfur; ⁅S - Z] is an oligopeptide radical with pendant sulfur S or modified oligopeptide radical with pendant sulfur S, and n is the number of ⁅S - Z] groups bonded to X.

In one embodiment, the polymer X is a diene based elastomer comprising at least one carbon-carbon double bond. The phrases "rubber or elastomer containing olefinic unsaturation" or "diene based elastomer" as used herein are equivalent and are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic rubbers are the homopolymerization products of butadiene and its homologues and derivatives, for example, methylbutadiene (i.e., isoprene), dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers, silicon-coupled and tin-coupled star-branched polymers. In one embodiment, the rubber or elastomers are selected from styrene-butadiene rubber (SBR), polybutadiene rubber (IR), natural rubber (NR), polyisoprene rubber (IR), isoprene-butadiene rubber (IBR), styrene-isoprene rubber (SIR), and styrene-isoprene-butadiene rubber (SIBR).

The polymer X may be derived from various monomers, including conjugated diene monomers and optionally vinyl aromatic monomers. Suitable conjugated diene monomers include 1,3-butadiene and isoprene. Some additional conjugated diolefin monomers that can be utilized include 2,3-dimethyl-1,3-butadiene, piperylene, 3-butyl-1,3-octadiene, 2-phenyl-1,3-butadiene, and the like, alone or in admixture. Suitable vinyl aromatic monomers include vinyl aromatic monomers that contain from 8 to 20 carbon atoms. Usually, the vinyl aromatic monomer will contain from 8 to 14 carbon atoms. Some examples of vinyl aromatic monomers that can be utilized include styrene, 1-vinylnaphthalene, 2-vinylnaphthalene, α-methylstyrene, 4-phenylstyrene, 3-methylstyrene and the like. Styrene and α -methylstyrene are preferred vinyl aromatic monomers for copolymerization with the conjugated diolefin monomers. The most widely used vinyl aromatic monomer is styrene.

In one aspect of this invention, an emulsion polymerization derived styrene/butadiene rubber (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The oligopeptide radical with pendant sulfur ⁅S - Z] comprises from 2 to 20 amino acid residues, wherein at least one amino acid residue is a cysteine residue comprising the pendant sulfur atom.

In one embodiment, the oligopeptide radical with pendant sulfur ⁅S - Z] comprises from 2 to 10 amino acid residues, wherein at least one amino acid residue is a cysteine residue comprising the pendant sulfur atom.

In one embodiment, the oligopeptide radical with pendant sulfur ⁅S - Z] comprises from 2 to 5 amino acid residues, wherein at least one amino acid residue is a cysteine residue comprising the pendant sulfur atom.

By modified oligopeptide, it is meant that in addition to a peptide grouping of 2 or more amino acid residues, the modified oligopeptide contains additional, non-amino acid or peptide functional group moieties. In one embodiment, the modified oligopeptide radical with pendant sulfur S may be as disclosed in US-A- 6,414,114; US-A- 5,679,643; and US-A- 5,223,488, all of which are fully incorporated by reference herein.

In one embodiment, the oligopeptide radical ⁅S - Z] is a glutathione radical.

In one embodiment, the oligopeptide radical ⁅S - Z] is of formula II

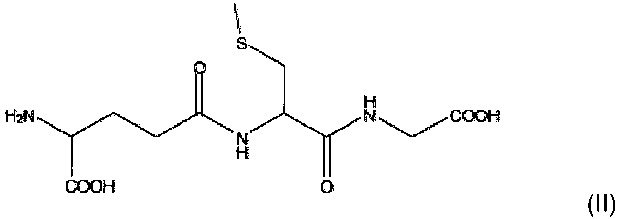

The number n of ⁅S-Z] groups bonded to X ranges from 2 to 30 in a given copolymer molecule.

The functionalized elastomer may be produced by various methods. In one embodiment, the functionalized elastomer may be produced by functionalizing the polymer X with a oligopeptide radical with pendant sulfur S. By pendant sulfur S, it is meant that the sulfur atom S exists as an end or side group attached to the main chain in the oligopeptide radical, and is thus available for bonding with a carbon-carbon double bond of the elastomer X. A convenient way for the functionalization of a variety of elastomers is the thiol-ene reaction during which alkene moieties being present in the elastomers are transformed into thioethers by reaction with thiols. This reaction proceeds preferably with vinyl groups as they are present in styrene-butadiene rubbers, butadiene rubbers, and polyisoprene rubbers. In order to allow the functionalization of the elastomers, the ⁅S-Z] grouping, where S is sulfur, may be linked to the elastomer X through reaction of the oligopeptide thiol HS-Z with vinyl groups of the elastomer X to form a thioether of formula I. Further details of the thiol-ene reaction as it relates to elastomers may be found by reference to US-A- 6,365,668 and US-A- 7,847,019, both fully incorporated by reference herein.

One step of the method to produce the functionalized elastomer is to obtain a diene based elastomer comprising at least one carbon-carbon double bond.

A second step of the method is obtaining an oligopeptide with pendant thiol group.

A third step of the method is reacting the diene based elastomer with the functionalizing agent to form the functionalized elastomer. During reaction of the functionalizing agent with the elastomer, the functional group Z is linked to the first polymer through reaction of the thiol S with the unsaturated carbon-carbon bond of the elastomer.

In one embodiment, the functionalizing agent is reacted with the elastomer in a suitable solvent in the presence of a free-radical initiator via a thiol-ene reaction as is known in the art, see for example *Macromolecules* **2008,** *41*, 9946-9947. In one embodiment, the free-radical initiator is selected from the group consisting of 2,4,6-trimethylbenzoyldiphenylphosphine oxide and azobisisobutyonitrile (AIBN). Suitable solvent include hydrocarbon solvents such as hexane and cyclohexane, and tetrahydrofuran (THF), and the like.

The invention is further illustrated by the following examples.

### Example 1

In this example, the functionalization of a diene based elastomer with an oligopeptide is illustrated, according to the present invention. Styrene-butadiene rubber was functionalized with glutathione by the following synthesis scheme:

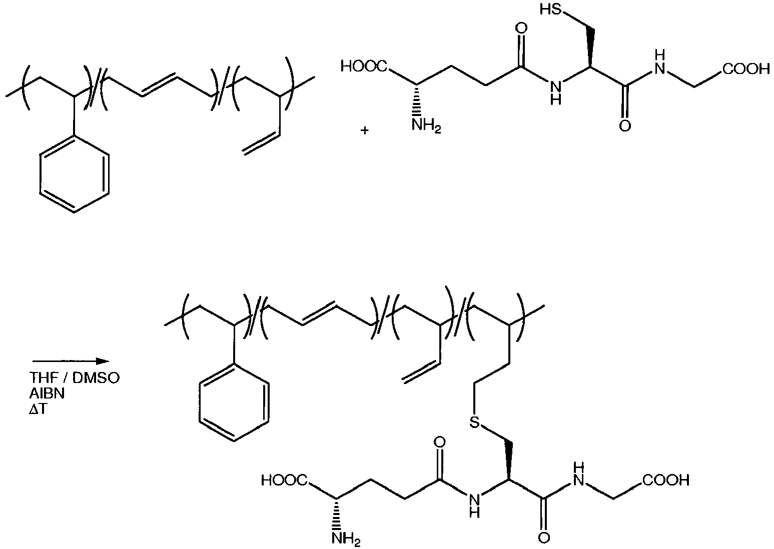

### Synthesis of glutathione functionalized SBR

For the functionalization of SBR with glutathione, 2g SBR and 0.05 g AIBN were dissolved in 40 ml dry THF. 0.5 g glutathione in 5 ml DMSO were added to the reaction mixture. The resulting solution was degassed under argon atmosphere at room temperature for 2 hours. The mixture was placed in a preheated oil bath at 65°C for at least 24 hours. Because of the good solubility of glutathione in water the product was precipitated three times in water. The product was dried under vacuum.

### Example 2

In this example, the effect of functionalizing a diene based elastomer with an oligopeptide is illustrated. The glutathione-functionalized SBR of Example 1 was combined with toluene to form a mixture containing 10 percent by weight of elastomer. The resulting mixture formed a gel. A control mixture of non-functionalized SBR resulted in complete dissolution of the SBR in toluene. The gel formation in the case of the functionalized SBR was surprising and unexpected, in that the non-functionalized SBR was fully soluble in the solvent. The formation of the gel in toluene by the glutathione-functionalized SBR suggests interaction between the glutathione moieties sufficient to prevent dissolution of the functionalized elastomer. While not wishing to be bound any theory, this behavior may result from supramolecular interactions of the glutathione moieties as described earlier herein.

### Example 3

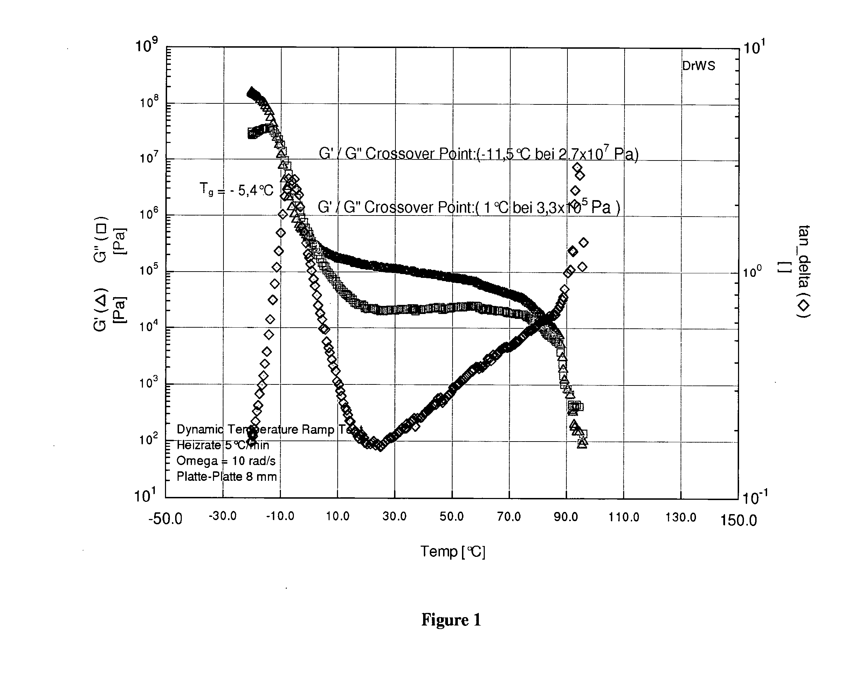

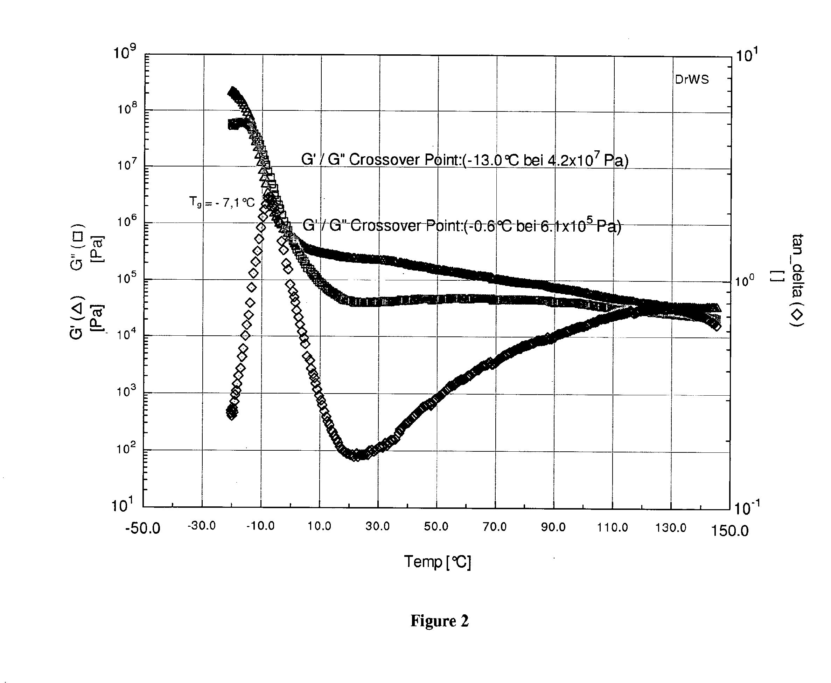

In this example, rheological properties are illustrated for a diene based elastomer functionalized with an oligopeptide according to the present invention. Figures 1 and 2 show the rheological behavior of the non-functionalized (Figure 1) and glutathione- functionalized SBR (Figure 2) of Example 1 which were investigated using a parallel plate rheometer (8 mm plates) and a heating rate of 5°C per minute (Ω=10 rad/s ≈ 1.59 Hz).

The behavior illustrated in Figure 2 suggests that the functionalized SBR exhibits interaction between glutathione groups. Figure 2 shows a broad rubbery plateau for the functionalized elastomer extending past 130 °C, with resistance to flow at lower temperatures caused by interaction of the glutathione moieties. By contrast, the control non-functionalized elastomer shows a much narrower rubbery region with flow of the elastomer occurring at about 70 °C. The expansion of the rubbery plateau region for the functionalized elastomer as compared to control was surprising and unexpected.

## Claims

1. A functionalized elastomer having the structure I
x⁅s-z]ₙ (I)
where X is a polymer derived from a monomer comprising at least one conjugated diene monomer and optionally at least one vinyl aromatic monomer; S is sulfur; ⁅S-Z] is an oligopeptide radical with pendant sulfur S or modified oligopeptide radical with pendant sulfur S, and n is the number of ⁅S - Z] groups bonded to X,
**characterized in that** the oligopeptide radical with pendant sulfur ⁅S - Z] comprises from 2 to 20 amino acid residues, wherein at least one amino acid residue is a cysteine residue comprising the pendant sulfur atom.

2. The functionalized elastomer of claim 1, wherein the oligopeptide radical with pendant sulfur ⁅S - Z] comprises from 2 to 10 amino acid residues, wherein at least one amino acid residue is a cysteine residue comprising the pendant sulfur atom.

3. The functionalized elastomer of claim 1, wherein the oligopeptide radical with pendant sulfur ⁅S - Z] comprises from 2 to 5 amino acid residues, wherein at least one amino acid residue is a cysteine residue comprising the pendant sulfur atom.

4. The functionalized elastomer of claim 1, wherein the oligopeptide radical ⁅S - Z] is a glutathione radical.

5. The functionalized elastomer of claim 1, wherein the oligopeptide radical ⁅S - Z] is of formula (II)

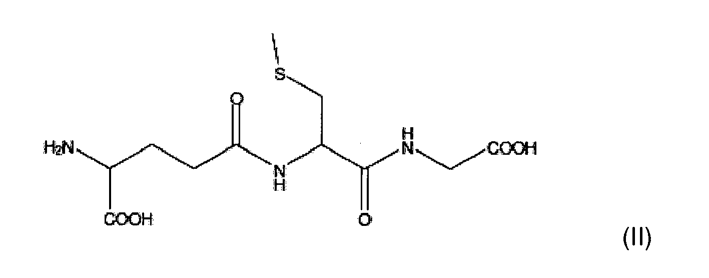

6. The functionalized elastomer of claim 1, wherein the number n of ⁅S-Z] groups bonded to X ranges from 2 to 30.

7. The functionalized elastomer of claim 1, wherein X is selected from the group consisting of styrene-butadiene rubber, polybutadiene rubber, natural rubber, polyisoprene rubber, isoprene-butadiene rubber, styrene-isoprene rubber, and styrene-isoprene-butadiene rubber.

8. The functionalized elastomer of claim 1, wherein the conjugated diene monomer is selected from the group consisting of 1,3-butadiene, isoprene, 2,3-dimethyl-1,3-butadiene, piperylene, 3-butyl-1,3-octadiene, and 2-phenyl-1,3-butadiene.

9. The functionalized elastomer of claim 1, wherein the conjugated diene monomer is selected from the group consisting of 1,3-butadiene and isoprene.

10. The functionalized elastomer of claim 1, wherein the vinyl aromatic monomer is selected from the group consisting of styrene, 1-vinylnaphthalene, 2-vinylnaphthalene, α-methylstyrene, 4-phenylstyrene, and 3-methylstyrene.

11. A tire having a component, the component comprising the functionalized elastomer in accordance with at least one of the previous claims.

## Patentansprüche

1. Funktionalisiertes Elastomer mit der Struktur I
x⁅s-z]ₙ (I)
wobei X ein Polymer ist, abgeleitet von einem Monomer, das mindestens ein konjugiertes Dienmonomer und optional mindestens ein aromatisches Vinylmonomer umfasst; S Schwefel ist; ⁅s-z] ein Oligopeptidradikal mit anhängendem Schwefel S oder modifiziertes Oligopeptidradikal mit anhängendem Schwefel S ist, und n die Anzahl von an X gebundenen ⁅s-z] Gruppen ist, **dadurch gekennzeichnet, dass** das Oligopeptidradikal mit anhängendem Schwefel
⁅s-z] 2 bis 20 Aminosäurereste umfasst, wobei mindestens ein Aminosäurerest ein Cysteinrest ist, der das anhängende Schwefelatom umfasst.

2. Funktionalisiertes Elastomer nach Anspruch 1, wobei das Oligopeptidradikal mit anhängendem Schwefel ⁅s-z] 2 bis 10 Aminosäurereste umfasst, wobei mindestens ein Aminosäurerest ein Cysteinrest ist, der das anhängende Schwefelatom umfasst.

3. Funktionalisiertes Elastomer nach Anspruch 1, wobei das Oligopeptidradikal mit anhängendem Schwefel ⁅s-z] 2 bis 5 Aminosäurereste umfasst, wobei mindestens ein Aminosäurerest ein Cysteinrest ist, der das anhängende Schwefelatom umfasst.

4. Funktionalisiertes Elastomer nach Anspruch 1, wobei das Oligopeptidradikal ⁅s-z] ein Glutathionradikal ist.

5. Funktionalisiertes Elastomer nach Anspruch 1, wobei das Oligopeptidradikal ⁅s-z] die Formel (II) aufweist:

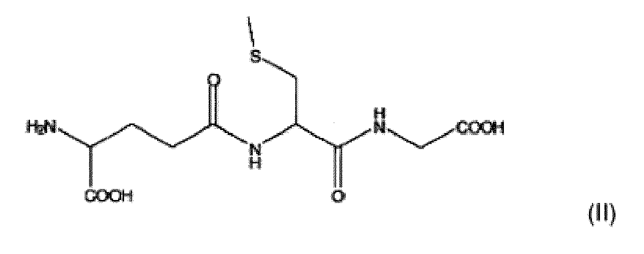

6. Funktionalisiertes Elastomer nach Anspruch 1, wobei die Anzahl n von an X gebundenen ⁅s-z] Gruppen sich auf 2 bis 30 beläuft.

7. Funktionalisiertes Elastomer nach Anspruch 1, wobei X aus der aus StyrolButadien-Kautschuk, Polybutadienkautschuk, Naturkautschuk, Polyisoprenkautschuk, Isopren-Butadien-Kautschuk, Styrol-Isopren-Kautschuk und Styrol-Isopren-Butadien-Kautschuk bestehenden Gruppe ausgewählt ist.

8. Funktionalisiertes Elastomer nach Anspruch 1, wobei das konjugierte Dienmonomer aus der aus 1,3-Butadien, Isopren, 2,3-Dimethyl-1,3-butadien, Piperylen, 3-Butyl-1,3-octadien und 2-Phenyl-1,3-butadien bestehenden Gruppe ausgewählt ist.

9. Funktionalisiertes Elastomer nach Anspruch 1, wobei das konjugierte Dienmonomer aus der aus 1,3-Butadien und Isopren bestehenden Gruppe ausgewählt ist.

10. Funktionalisiertes Elastomer nach Anspruch 1, wobei das aromatische Vinylmonomer aus der aus Styrol, 1-Vinylnaphthalen, 2-Vinylnaphthalen, α-Methylstyrol, 4-Phenylstyrol und 3-Methylstyrol bestehenden Gruppe ausgewählt ist.

11. Reifen mit einem Bauteil, wobei das Bauteil das funktionalisierte Elastomer gemäß mindestens einem der vorgenannten Ansprüche umfasst.

## Revendications

1. Élastomère fonctionnalisé possédant la structure I
x⁅s-z]ₙ (I)
dans laquelle X représente un polymère dérivé d'un monomère comprenant au moins un monomère diénique conjugué et de manière facultative au moins un monomère vinylaromatique ; S représente un atome de soufre ; le groupe ⁅s-z] représente un radical oligopeptidique possédant un atome de soufre pendant ou un radical polypeptidique modifié possédant un atome de soufre pendant, et n représente le nombre de groupes ⁅s-z] liés à X, **caractérisé en ce que** le radical oligopeptidique comprenant un groupe ⁅s-z] comprenant un atome de soufre pendant comprend de 2 à 20 résidus d'acides aminés, au moins un résidu d'acide aminé représentant un résidu de cystéine comprenant l'atome de soufre pendant.

2. Élastomère fonctionnalisé selon la revendication 1, dans lequel le radical oligopeptidique comprenant un groupe ⁅s-z] comprenant un atome de soufre pendant comprend de 2 à 10 résidus d'acides aminés, au moins un résidu d'acide aminé représentant un résidu de cystéine comprenant l'atome de soufre pendant.

3. Élastomère fonctionnalisé selon la revendication 1, dans lequel le radical oligopeptidique comprenant un groupe ⁅s-z] comprenant un atome de soufre pendant comprend de 2 à 5 résidus d'acides aminés, au moins un résidu d'acide aminé représentant un résidu de cystéine comprenant l'atome de soufre pendant.

4. Élastomère fonctionnalisé selon la revendication 1, dans lequel le radical oligopeptidique ⁅s-z] est un radical de glutathion.

5. Élastomère fonctionnalisé selon la revendication 1, dans lequel le radical oligopeptidique ⁅s-z] répond à la formule (II) :

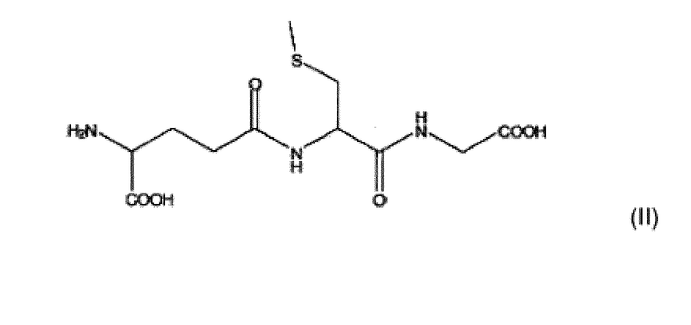

6. Élastomère fonctionnalisé selon la revendication 1, dans lequel le nombre n de groupes ⁅s-z] liés à X se situe dans la plage de 2 à 30.

7. Élastomère fonctionnalisé selon la revendication 1, dans lequel X est choisi parmi le groupe constitué par un caoutchouc de styrène-butadiène, un caoutchouc de polybutadiène, un caoutchouc naturel, un caoutchouc de polyisoprène, un caoutchouc d'isoprène-butadiène, un caoutchouc de styrène-isoprène et un caoutchouc de styrène-isoprène-butadiène.

8. Élastomère fonctionnalisé selon la revendication 1, dans lequel le monomère diénique conjugué est choisi parmi le groupe constitué par le 1,3-butadiène, l'isoprène, le 2,3-diméthyl-1,3-butadiène, le pipérylène, le 3-butyl-1,3-octadiène et le 2-phényl-1,3-butadiène.

9. Élastomère fonctionnalisé selon la revendication 1, dans lequel le monomère diénique conjugué est choisi parmi le groupe constitué par le 1,3-butadiène et l'isoprène.

10. Élastomère fonctionnalisé selon la revendication 1, dans lequel le monomère vinylaromatique est choisi parmi le groupe constitué par le styrène, le 1-vinylnaphtolène, le 2-vinylnaphtalène, l'α-méthylstyrène, le 4-phénylstyrène et le 3-méthylstyrène.

11. Bandage pneumatique possédant un composant, le composant comprenant l'élastomère fonctionnalisé selon au moins une des revendications précédentes.
